# EUROPÄISCHE PATENTSCHRIFT

(11) **EP 4 138 565 B1**
(45) Veröffentlichungstag und Bekanntmachung des Hinweises auf die Patenterteilung: **25.12.2024**
(21) Anmeldenummer: 21719160.0
(22) Anmeldetag: 20.04.2021
(51) Int. Cl.: A23F 3/32, A23F 5/38, A23P 10/25, B65D 85/804

(54) **VERFAHREN ZUR BESCHICHTUNG EINES PULVERPRESSLINGS INSBESONDERE ZUR HERSTELLUNG EINER GETRÄNKEPULVER ENTHALTENDEN KAPSEL**
METHOD FOR COATING A POWDER COMPACT, IN PARTICULAR FOR PRODUCING A CAPSULE CONTAINING A BEVERAGE POWDER
PROCÉDÉ DE REVÊTEMENT D'UNE COMPRIMÉ EN POUDRE, EN PARTICULIER PERMETTANT DE FABRIQUER UNE CAPSULE CONTENANT DE LA POUDRE DE BOISSON

(30) Priorität: 20.04.2020 EP 20170381
(43) Veröffentlichungstag der Anmeldung: 01.03.2023
(73) Patentinhaber: Swiss Coffee Innovation AG, 4600 Olten (CH)
(72) Erfinder: NICKEL, Axel, 30966 Hemmingen (DE)
(74) Vertreter: Hepp Wenger Ryffel AG
(86) Internationale Anmeldenummer: PCT/EP2021/060223
(87) Internationale Veröffentlichungsnummer: WO 2021/214047

(56) Entgegenhaltungen:
- EP-A1- 3 511 266
- WO-A1-2017/167624
- WO-A2-2015/177591
- MELVILLE L. WOLFROM ET AL: "Polysaccharides from instant coffee powder", JOURNAL OF AGRICULTURAL AND FOOD CHEMISTRY, vol. 15, no. 4, 26 March 2019 (2019-03-26), pages 685 - 687, XP055574597, ISSN: 0021-8561, DOI: 10.1021/jf60152a040

## Beschreibung

Die vorliegende Erfindung betrifft ein Verfahren zur Beschichtung eines Pulverpresslings insbesondere zur Herstellung einer Getränkepulver enthaltenden Kapsel, welche für die Zubereitung eines Getränkes, wie Kakao, Tee oder Kaffee, geeignet ist.

Bei der portionsweisen Zubereitung von Getränken, insbesondere von gebrühtem Kaffee, wurden in den vergangenen Jahren neben Kaffeepads zunehmend Kaffeekapseln verwendet, deren Kapselwände üblicherweise aus Edelstahl, Aluminium oder Kunststoff gefertigt sind. Solche Kapseln erlauben es, Kaffeepulver über einen längeren Zeitraum ohne Aromaverlust zu lagern. Zudem erlauben solche Kapseln eine schnelle und bedienerfreundliche Herstellung einer Kaffeeportion mit gewünschter Geschmacksrichtung, indem eine Kapsel mit gewünschter Kaffeesorte in eine daran angepasste Kaffeemaschine eingesetzt wird, in welcher dann heißes Wasser durch die Kapsel gepresst und daraus gebrühter Kaffee hergestellt wird. Allerdings sind derartige Kapseln unter anderem aufgrund des eingesetzten Kapselmaterials sowie der produktionsaufwendigen Kapselkonstruktion vergleichsweise teuer. Ferner sind derartige Kapseln umweltpolitisch problematisch. Zum einen sind die Kapseln nicht wiederverwertbar und werden vom Verbraucher nach dem Gebrauch in der Regel als Restmüll entsorgt. Ein Recycling von Kaffeekapseln findet daher praktisch nicht statt, was insbesondere bei Kaffeekapseln auf Aluminiumbasis bedenklich ist, da die Aluminiumherstellung sehr energieintensiv ist, wodurch sich bei solchen Kapseln eine besonders schlechte CO₂-Bilanz ergibt. Ein weiterer großer Nachteil ist, dass derartige Kapseln biologisch nicht abbaubar sind und somit auch nicht biologisch entsorgt werden können. In Anbetracht der Tatsache, dass allein in Deutschland pro Jahr weit über 2 Milliarden Kaffeekapseln verbraucht werden, ist dies ein ernstzunehmendes Problem.

Um die vorstehenden Probleme zumindest teilweise zu umgehen, sind bereits Kapseln aus alternativen Materialien vorgeschlagen worden.

Aus der WO 2010/006979 A1 sind beispielsweise Kapseln bekannt, welche in ihrem Inneren mit Kaffee oder Tee gefüllt sind und eine Kapselwand umfassen, welche zusätzlich zu dem Kapselinhalt noch Wasser als Strukturierungskomponente enthält. Für das Ausbilden einer stabilen Kapselwand ist es jedoch erforderlich, dass die Kapsel unter den Gefrierpunkt der Strukturierungskomponente gekühlt wird, weil die Strukturierungskomponente bei einem Überschreiten deren Gefrierpunktes schmilzt und den Kapselinhalt befeuchtet. Dies beschränkt die Verwendung solcher Kapseln naturgemäß erheblich.

In der WO 2009/053811 A2 wird eine Kapsel beschrieben, die gemahlenen Kaffee, Cappuccinopulver, Schokoladenpulver, Milchpulver oder Teepulver enthalten kann. Die Kapsel umfasst zwei Halbschalen, welche die Kapselwände ausbilden. Dabei bestehen die Kapselwände aus einem in Wasser löslichen Material, das sich bei dem Brühvorgang auflöst. Bei diesem Konzept wird das Kapselwandmaterial während des Brühvorgangs aufgelöst und damit Bestandteil des zubereiteten Getränks, was den Geschmack unerwünscht beeinflussen kann. Abgesehen davon ist die Herstellung solcher Kapseln aufwendig und teuer.

Um die vorgenannten Nachteile zu überwinden, ist es in der EP 3 115 316 A1 auch schon vorgeschlagen worden, eine insbesondere zur Herstellung von Kaffee geeignete Kapsel vorzusehen, welche einen Pressling aus einem wenigstens ein Polysaccharid enthaltendem Pulver, wie Kaffeepulver, umfasst, wobei der Pressling mit wenigstens einer Beschichtungsschicht ummantelt ist, wobei die wenigstens eine Beschichtungsschicht ein vernetztes Polysaccharid umfasst. Vorzugsweise ist die Beschichtungsschicht aus einem Alginat zusammengesetzt und wird erhalten, indem der Pressling in eine Alkalimetallalginatlösung eingetaucht wird, bevor der so behandelte Pressling in eine Erdalkalimetallsalzlösung eingetaucht wird. Dabei wird fungieren die Erdalkalimetallionen als Vernetzer, da sie koordinative bzw. ionische Bindungen mit Gruppen des Alginats eingehen. Dadurch wird eine wasserunlösliche Ummantelung erhalten, die den Geschmack des aus der Kapsel hergestellten Getränks nicht beeinträchtigt und eine ausreichende Stabilität der Kapsel bereitstellt, um einen Transport- und Anfassschutz sicherzustellen, ohne dass der Kapselinhalt einen nennenswerten Aromaverlust erleidet. Aufgrund der vergleichsweise hohen Viskosität von Alkalimetallalginatlösung haftet das Beschichtungsmaterial an dem hydrophoben Kaffeepulverpressling schlecht an. Dies macht eine Überführung und ein Eintauchen des Pulverpresslings aus der Alkalimetallalginatlösung in die Erdalkalimetallsalzlösung schwierig. Auch wenn dies behutsam und mithilfe von speziell konstruierten Aufnahmen und Haltern durchgeführt wird, ist das Erhalten einer ausreichend gleichmäßigen Beschichtungsdicke auf dem Pulverpressling schwierig, wenn überhaupt möglich. EP3511266 offenbart ein Verfahren zur Herstellung einer Getränkepulver-enthaltenden-Kapsel mit einem Pressling aus einer Pulvermischung, wobei der Pressling mit einer Beschichtungsschicht ummantelt ist.

Ausgehend davon liegt der vorliegenden Erfindung die Aufgabe zugrunde, ein Verfahren zur Beschichtung eines Pulverpresslingsinsbesondere zur Herstellung einer Getränkepulver enthaltenden Kapsel für die portionsweise Zubereitung von Getränken aus Getränkepulver, wie Kakao, Tee und Kaffee, bereit zu stellen, mit dem einfach und zuverlässig ein beschichteter Pulverpressling mit einer gleichmäßigen Beschichtungsdicke erhalten wird.

Erfindungsgemäß wird diese Aufgabe gelöst durch ein Verfahren zur Beschichtung eines Pulverpresslings insbesondere zur Herstellung einer Getränkepulver enthaltenden Kapsel, welches, die folgenden Schritte umfasst:
i) Bereitstellen eines Pulverpresslings aus einem wenigstens ein Polysaccharid enthaltendem Pulver,
ii) Bereitstellen eines Behälters mit einer Behälterwand aus einem perforierten Material, welche einen Hohlraum umschließt, wobei das perforierte Material ein Material ist, das eine Vielzahl von kleinen, regelmässig in dem Material angeordnete Löcher aufweist, wobei die Löcher im Wesentlichen die gleiche Form und Grösse aufweisen, wobei der Behälter eine Einlassöffnung zum Einbringen von Beschichtungsflüssigkeit in den Hohlraum aufweist,
iii) Einbringen des Pulverpresslings in den Hohlraum des Behälters, wobei der Pulverpressling kleiner als das Volumen des Hohlraums ist,
iv) Einbringen von einer ein Beschichtungsmaterial enthaltenden Beschichtungsflüssigkeit über die Einlassöffnung in den Hohlraum,
v) Eintauchen des mit dem Pulverpressling und dem Beschichtungsmaterial befüllten Behälters in eine eine Härterverbindung enthaltende Härterflüssigkeit, wobei die Viskosität der Härterflüssigkeit geringer als die Viskosität der Beschichtungsflüssigkeit ist, sowie
vi) Entnehmen des Behälters aus der Härterflüssigkeit und Entnehmen des beschichteten Pulverpresslings aus dem Behälter.

Diese Lösung basiert auf der Erkenntnis, dass durch die Verwendung eines Behälters mit einer Behälterwand aus einem perforierten Material, welche einen Hohlraum umschließt, wobei der Behälter eine Einlassöffnung zum Einbringen von Beschichtungsflüssigkeit aufweist, einfach und zuverlässig ein Pulverpressling beschichtet werden kann, wobei eine gleichmäßige Dicke der Beschichtung des Pulverpresslings erhalten wird. Da der in dem Schritt iii) in den Hohlraum des Behälters eingebrachte Pulverpressling ein kleineres Volumen aufweist als der Hohlraum, mithin der Pulverpressling in den Hohlraum passt, bildet sich zwischen dem Pulverpressling und der Innenseite der den Hohlraum des Behälters begrenzenden Behälterwand aus perforiertem Materials ein Zwischenraum aus, der in dem Schritt iv) durch das Einbringen der Beschichtungsflüssigkeit mit der Beschichtungsflüssigkeit befüllt werden kann. Aufgrund der Perforation sowie der Einlassöffnung wird die anfänglich in dem Zwischenraum vorhandene Luft durch die Beschichtungsflüssigkeit verdrängt, so dass in dem Schritt iv) der gesamte Zwischenraum vollständig mit der Beschichtungsflüssigkeit befüllt werden kann. Da der Pulverpressling auf der eingebrachten Beschichtungsflüssigkeit aufschwimmt, ist der Pulverpressling durch eine gleichmäßig dicke Schicht aus Beschichtungsflüssigkeit umgeben, wenn der Zwischenraum vollständig mit der Beschichtungsflüssigkeit befüllt ist. Durch das Eintauchen des mit dem Pulverpresslings und dem Beschichtungsmaterial befüllten Behälters in die Härterflüssigkeit wird so einfach und zuverlässig eine gleichmäßige Beschichtungsdicke erhalten. Da die Härterflüssigkeit eine geringere Viskosität als die Beschichtungsflüssigkeit aufweist, kann die Härterflüssigkeit während des Schrittes v) schnell und gleichmäßig über die Fläche des Behälters durch das perforierte Material, also über deren kleine Löcher, in den Behälter eintreten und damit die Beschichtungsflüssigkeit kontaktieren, wohingegen die Beschichtungsflüssigkeit aufgrund der höheren Viskosität nicht durch das perforierte Material aus dem Behälter austritt. Somit wird durch das Verfahren einfach und zuverlässig ein beschichteter Pulverpressling mit einer gleichmäßigen Beschichtungsdicke erhalten.

Unter perforiertem Material wird im Sinne der vorliegenden Erfindung ein Material verstanden, das eine Vielzahl von kleinen Löchern aufweist, wobei die Löcher regelmäßig in dem Material angeordnet sind und jeweils zumindest im Wesentlichen die gleiche Form und Größe aufweisen.

Bezüglich des Polysaccharid enthaltenden Materials, aus welchem der in dem Schritt i) bereitgestellte Pulverpressling zusammengesetzt ist, ist die vorliegende Erfindung nicht besonders limitiert. Gute Ergebnisse werden insbesondere erhalten, wenn der Pulverpressling ein Material enthält oder bevorzugt aus einem Material zusammengesetzt ist bzw. besteht, welches aus der Gruppe ausgewählt ist, welche aus Kaffee, Tee, Trinkschokolade, Kakao und Milchpulver besteht. Gute Ergebnisse werden insbesondere erhalten, wenn der Pulverpressling aus gemahlenem Kaffeepulver besteht.

Unter einem Pulverpressling wird im Sinne der vorliegenden Erfindung verdichtetes Pulver verstanden. Gute Ergebnisse werden insbesondere erhalten, wenn der der in dem Schritt i) bereitgestellte Pulverpressling durch Pressen von Pulver, insbesondere Kaffeepulver, mit einem Druck von 1 bis 100 MPa, besonders bevorzugt mit einem Druck von 5 bis 50 MPa und ganz besonders bevorzugt mit einem Druck von 15 bis 30 MPa, hergestellt worden ist. Hierdurch ist eine ausreichende Verdichtung gegeben, damit eine sichere Ummantelung des Pulverpresslings vorgenommen werden kann und eine gute Sauerstoffbarriere erreicht wird. Bei niedrigeren Drücken gibt es keinen ausreichenden Zusammenhalt und bei höheren Drücken kommt es zu einer zu starken Verdichtung, die sich unter Umständen nach Entnahme aus der Presse wieder entspannt, was zu einer Zerstörung der Kapseln führen kann.

Grundsätzlich kann der Pulverpressling jede beliebige Form aufweisen. Vorzugsweise ist der Pulverpressling kugelförmig ausgestaltet. Gute Ergebnisse werden insbesondere erhalten, wenn der Durchmesser des kugelförmigen Pulverpresslings 1 bis 10 cm, bevorzugt 1 bis 5 cm, besonders bevorzugt 2 bis 4 cm und höchst bevorzugt 2,7 bis 3,7 cm aufweist.

Im Einklang hiermit ist es bevorzugt, dass (auch) der Hohlraum des Behälters kugelförmig ausgestaltet ist, also die Innenfläche des Behälters kugelförmig ist.

In Weiterbildung des Erfindungsgedankens wird es vorgeschlagen, dass der Durchmesser des Hohlraums in dem Behälter 0,5 bis 10,0 mm, bevorzugt 1,0 bis 8,0 mm und besonders bevorzugt 3,0 bis 6,0 mm größer ist als der Durchmesser des eingesetzten kugelförmigen Pulverpresslings.

Gemäß einer besonders bevorzugten Ausführungsform der vorliegenden Erfindung ist das perforierte Material, aus welchem die Behälterwand des Behälters zusammengesetzt ist, ein Drahtgewebe. Unter einem Drahtgewebe wird im Sinne der vorliegenden Erfindung ein Flächengebilde mit gleichartigen Löchern in regelmäßiger Anordnung verstanden, die durch rechtwinkliges Verkreuzen von Kett- und Schussdrähten ausgebildet sind. Zum einen sind Drahtgewebe vergleichsweise kostengünstig und leicht verarbeitbar bzw. formbar und zum anderen sind die darin enthaltenen Löcher besonders regelmäßig angeordnet und weisen die gleiche Form und Größe auf.

Vorzugsweise weist das poröse Material, bevorzugt das Drahtgewebe, Löcher mit einer derartigen Größe bzw. einer derartigen Maschenweite auf, dass die viskosere Beschichtungsflüssigkeit nicht durch das perforierte Material, bevorzugt das Drahtgewebe, aus dem Hohlraum des Behälters und somit aus dem Behälter austritt, aber die weniger viskosere Härterflüssigkeit schnell und gleichmäßig über die Fläche des Behälters durch das perforierte Material, bevorzugt das Drahtgewebe, in den Behälter eintritt, wenn der Behälter in die Härterflüssigkeit eingetaucht ist.

Gute Ergebnisse werden insbesondere erhalten, wenn die Löcher des porösen Materials der Behälterwand einen Durchmesser bzw. das Drahtgewebe eine Maschenweite von 0,01 bis 0,30 mm, weiter bevorzugt von 0,02 bis 0,21 mm, besonders bevorzugt von 0,04 bis 0,08 mm, ganz besonders bevorzugt von 0,05 bis 0,075 mm und höchst bevorzugt von 0,058 bis 0,068 mm, wie beispielsweise etwa 0,063 mm, aufweisen.

Wie beschrieben, wird als poröses Material für die Behälterwand vorzugsweise ein Drahtgewebe eingesetzt. Vorzugsweise ist das Drahtgewebe aus Stahl oder Edelstahl gefertigt. In Weiterbildung des Erfindungsgedankens wird es vorgeschlagen, dass das Drahtgewebe eine Drahtstärke von 0,01 bis 0,30 mm, bevorzugt von 0,02 bis 0,20 mm, besonders bevorzugt von 0,03 bis 0,10 mm, ganz besonders bevorzugt von 0,04 bis 0,06 mm und höchst bevorzugt von 0,045 bis 0,055 mm aufweist.

Erfindungsgemäß umfasst der in dem Schritt ii) bereitgestellte Behälter eine Einlassöffnung zum Einbringen von Beschichtungsflüssigkeit in den Hohlraum. Um die Beschichtungsflüssigkeit gut durch die Einlassöffnung in den Hohlraum des Behälters einführen zu können, wird es gemäß einer weiteren bevorzugten Ausführungsform vorgeschlagen, dass über der Einlassöffnung des Behälters ein mit dem Behälter fest verbundenes Rohr angeordnet ist, welches bevorzugt mit seiner Längsachse radial an der Behälterwand angeordnet ist.

Grundsätzlich kann das Rohr aus jedem Material bestehen, wie beispielsweise aus demselben Material wie der Behälter, also bevorzugt Stahl oder Edelstahl. Allerdings ist das Rohr vorzugsweise unperforiert.

Grundsätzlich ist die vorliegende Erfindung bezüglich der Form des Rohres nicht beschränkt. Das Rohr kann beispielsweise einen rechteckigen, quadratischen, runden, elliptischen, ovalen oder polygonalen Querschnitt aufweisen. Vorzugsweise ist das Rohr ein Rechteckrohr oder ein Rundrohr mit einer Länge von 1,0 bis 5,0 cm und bevorzugt von 2,0 bis 4,0 cm. Gute Ergebnisse werden insbesondere mit einem Rundrohr mit einem Innendurchmesser von 0,1 bis 5,0 mm, bevorzugt von 0,5 bis 2,5 mm, besonders bevorzugt von 0,75 bis 1,25 mm, ganz besonders bevorzugt von 0,9 bis 1,1 mm und höchst bevorzugt von 0,95 bis 1,05 mm erhalten.

Um den Pulverpressling einfach in den Hohlraum des Behälters einbringen zu können und den beschichteten Pulverpressling einfach aus dem Hohlraum des Behälters entfernen zu können, wird es in Weiterbildung des Erfindungsgedankens vorgeschlagen, dass der Behälter aus zwei Hälften aufgebaut ist, welche miteinander über ein Verbindungselement, wie beispielsweise ein Scharnier, verbunden sind und so einfach zu dem geschlossenen Behälter zusammengeführt werden können. Im Falle der bevorzugten kugelförmigen Ausgestaltung des Behälters weist der Behälter vorzugsweise zwei über ein Scharnier miteinander verbundene Halbkalotten auf. Beide Halbkalotten weisen bevorzugt jeweils die gleichen Dimensionen auf und sind jeweils aus dem gleichen perforierten Material gebildet. Wenn die beiden Halbkalotten jeweils mit ihrem Äquator passgenau aufeinandergelegt sind, begrenzen diese einen kugelförmigen Hohlraum ausgenommen der Einlassöffnung, welche bevorzugt nur in einer der beiden Halbkalotten ausgebildet ist. Gute Ergebnisse werden insbesondere erhalten, wenn die Einlassöffnung an dem Pol einer der beiden Halbkalotten vorgesehen ist.

Der untere, äquatornahe Bereich der beiden Halbkalotten kann, im Querschnitt gesehen, auch einen geringfügig anderen Krümmungsradius aufweisen als der obere Bereich.

Um ein passgenaues und vollständiges Aufeinanderlegen der beiden Halbkalotten zu erleichtern, können beide Halbkalotten am Äquator einen nach außen stehenden Kragen aufweisen, der die Halbkalotten jeweils kreisringförmig umgibt.

Prinzipiell ist die vorliegende Erfindung bezüglich der Form der Einlassöffnung nicht beschränkt. Die Einlassöffnung kann beispielsweise einen rechteckigen, quadratischen, runden, elliptischen, ovalen oder polygonalen Querschnitt aufweisen. Vorzugsweise weist die Einlassöffnung einen kreisrunden Querschnitt, wobei der Durchmesser der Einlassöffnung vorzugsweise 0,1 bis 5,0 mm, weiter bevorzugt 0,5 bis 2,5 mm, besonders bevorzugt 0,75 bis 1,25 mm, ganz besonders bevorzugt 0,9 bis 1,1 mm und höchst bevorzugt 0,95 bis 1,05 mm beträgt.

Um einfach und schnell die gleichzeitige bzw. parallele Beschichtung mehrerer Pulverpresslinge durchführen zu können, kann das Verfahren auch mit einer Mehrzahl von Behältern durchgeführt werden, wobei ein wie zuvor beschrieben ausgestalteter Behälter in einem Gestell mit ein oder mehreren anderen Behältern gleicher Dimensionen verbunden ist. Auf diese Weise kann die Mehrzahl der Behälter gleichzeitig in einem Arbeitsschritt in eine Bad aus Härterflüssigkeit eingetaucht werden. In dieser Ausführungsform umfasst das Gestell bevorzugt 2 bis 100 sowie insbesondere 5 bis 50 Behälter.

Grundsätzlich ist das Verfahren bezüglich der chemischen Natur der in der Beschichtungsflüssigkeit enthaltenen Beschichtungsmaterials sowie der in der Härterflüssigkeit enthaltenen Härterverbindung nicht besonders beschränkt, solange die Härterflüssigkeit eine geringere Viskosität als die Beschichtungsflüssigkeit aufweist. Beispiele für geeignete Beschichtungsmaterialien sind solche, welche aus der Gruppe ausgewählt sind, welche aus Stärke, Cellulose, Chitin, Carrageen, Agar und Alginaten besteht.

Vorzugsweise beträgt die Viskosität der Härterflüssigkeit 0,01 bis 100 mPa·s, besonders bevorzugt 0,1 bis 20 mPa·s und ganz besonders bevorzugt 0,5 bis 10,0 mPa·s, wie etwa 1 mPa·s, wohingegen die Viskosität der Beschichtungsflüssigkeit vorzugsweise mehr als 100 bis 10.000 mPa·s, besonders bevorzugt 200 bis 5.000 mPa·s und ganz besonders bevorzugt 300 bis 1.000 mPa·s, wie etwa 500 mPa·s, beträgt.

Die Härterverbindung wird so ausgewählt, dass diese das Beschichtungsmaterial vernetzt, und zwar vorzugsweise über i) kovalente Bindungen oder ii) über ionische und/oder koordinative Bindungen.

Gemäß einer ganz besonders bevorzugten Ausführungsform der vorliegenden Erfindung wird in dem Verfahren als Beschichtungsmaterial Alginat eingesetzt. Dies hat den Vorteil, dass einfach und schnell durch Vernetzten mit Erdalkalimetallionen eine homogene Beschichtung ausgebildet wird, und zwar eine wasserunlösliche Beschichtung, die den Geschmack des aus dem beschichteten Pulverpressling hergestellten Getränks, wie Kaffee, nicht beeinträchtigt. Zudem wird dadurch eine ausreichende Stabilität des beschichteten Pulverpresslings bereitstellt, um einen Transport- und Anfassschutz sicherzustellen, ohne dass dessen Inhalt einen nennenswerten Aromaverlust erleidet. Zudem ist Calciumalginat biologisch hervorragend abbaubar. Ein weiterer Vorteil ist, dass es sich bei Calciumalginat um einen zugelassenen Lebensmittelzusatzstoff mit der E-Nummer E405 handelt, welches folglich gesundheitlich unbedenklich ist.

Daher ist es besonders bevorzugt, dass eine Beschichtungsflüssigkeit eingesetzt wird, welche als Beschichtungsmaterial ein Alkalimetallalginat (insbesondere Natriumalginat) enthält, sowie eine Härterflüssigkeit eingesetzt wird, welche als Härterverbindung ein Erdalkalimetallsalz (insbesondere ein Calciumsalz, wie Calciumchlorid) enthält.

Gute Ergebnisse werden beispielsweise erhalten, wenn als Beschichtungsflüssigkeit eine Alkalimetallalginatlösung, bevorzugt eine wässrige 0,5 bis 5 gew.-%-ige Alkalimetallalginatlösung und besonders bevorzugt eine wässrige 0,5 bis 5 gew.-%-ige Natriumalginatlösung eingesetzt wird, sowie als Härterflüssigkeit eine Erdalkalimetallsalzlösung, bevorzugt eine wässrige 1 bis 7 gew.-%-ige Erdalkalimetallsalzlösung und besonders bevorzugt eine wässrige 1 bis 7 gew.-%-ige Calciumchloridlösung eingesetzt wird.

Gemäß einer weiteren ganz besonders bevorzugten Ausführungsform der vorliegenden Erfindung umfasst das Verfahren die folgenden Schritte:
i) Bereitstellen eines Pulverpresslings aus einem wenigstens ein Polysaccharid enthaltendem Pulver,
ii) Bereitstellen eines Behälters mit einer Behälterwand aus Drahtgewebe, welche einen Hohlraum umschließt, wobei der Behälter eine Einlassöffnung zum Einbringen von Beschichtungsflüssigkeit in den Hohlraum aufweist, und, wobei das Drahtgewebe eine Maschenweite von 0,01 bis 0,30 mm, bevorzugt von 0,02 bis 0,21 mm, besonders bevorzugt von 0,04 bis 0,08 mm, ganz besonders bevorzugt von 0,05 bis 0,075 mm und höchst bevorzugt von 0,058 bis 0,068 mm aufweist,
iii) Einbringen des Pulverpresslings in den Hohlraum des Behälters, wobei der Pulverpressling kleiner als das Volumen des Hohlraums ist,
iv) Einbringen von einer ein Alkalimetallalginat enthaltenden Beschichtungsflüssigkeit über die Einlassöffnung in den Hohlraum,
v) Eintauchen des mit dem Pulverpressling und dem Beschichtungsmaterial befüllten Behälters in eine ein Erdalkalimetallsalz enthaltende Härterflüssigkeit, wobei die Viskosität der Härterflüssigkeit geringer als die Viskosität der Beschichtungsflüssigkeit ist, sowie
vi) Entnehmen des Behälters aus der Härterflüssigkeit und Entnehmen des beschichteten Pulverpresslings aus dem Behälter.

In allen vorgenannten Ausführungsformen können die Schritte i) bis vi) in der genannten Reihenfolge durchgeführt werden. Genauso gut ist es möglich den Schritt ii) vor dem Schritt i) oder gleichzeitig damit durchzuführen.

Zusätzlich zu den vorgenannten Schritten kann das Verfahren ferner als Schritt vii) das Trocknen des in dem Schritt vi) erhaltenen beschichteten Pulverpresslings umfassen.

Gemäß einer weiteren bevorzugten Ausführungsform ist es vorgesehen, dass die Dicke der Beschichtung der getrockneten beschichteten Pulverpresslings zwischen 10 und 600 µm und besonders bevorzugt zwischen 20 und 40 µm beträgt.

Nachfolgend wird die vorliegende Erfindung anhand von die Erfindung illustrierenden, aber nicht einschränkenden Figuren erläutert.

Dabei zeigen:
- Fig. 1: einen für das erfindungsgemäße Verfahren geeigneten Behälter mit einer Behälterwand aus einem perforierten Material gemäß einem Ausführungsbeispiel der vorliegenden Erfindung in geöffnetem Zustand.
- Fig. 2: den in der Fig. 1 gezeigten Behälter in geschlossenem Zustand.

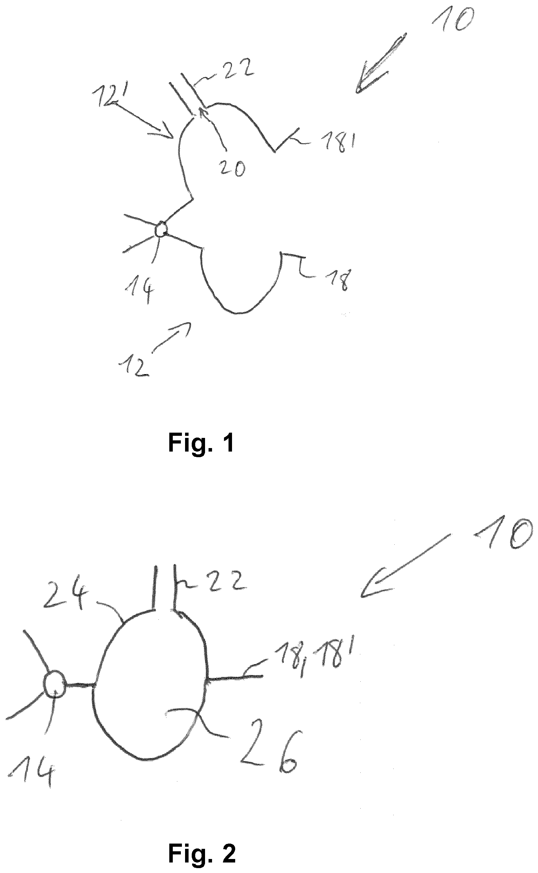

Der in der Fig. 1 gezeigte, zur Verwendung in dem Verfahren gemäß der vorliegenden Erfindung geeignete Behälter 10 umfasst zwei Halbkalotten 12, 12', die über ein Scharnier 14 miteinander verbunden sind. Die beiden Halbkalotten 12, 12' weisen jeweils die gleichen Dimensionen auf und sind jeweils aus dem gleichen perforierten Material, vorzugsweise einem Drahtgewebe aus Edelstahl, gebildet. Die Äquatoren 16, 16` der beiden Halbkalotten 12, 12' weisen jeweils einen radial nach außen stehenden Kragen 18, 18' der, welche die Halbkalotten 12, 12' jeweils kreisringförmig umgeben. An dem Pol der oberen Halbkalotte 12` ist eine Einlassöffnung 20 vorgesehen, über welcher ein mit dem Behälter fest verbundenes Rohr 22 angeordnet ist. Die beiden Halbkalotten 12, 12' bilden die Behälterwand 24.

In dem in der Figur 1 gezeigten geöffneten Zustand kann ein Pulverpressling einfach in den Hohlraum 26 des Behälters 10 gemäß dem Verfahrensschritt iii) eingeführt und ein beschichteter Pulverpressling einfach aus dem Hohlraum 26 des Behälters 10 gemäß dem Verfahrensschritt v) entfernt werden. Durch Zusammenklappen der beiden Halbkalotten 12, 12' über das Scharnier 14 können die beiden Halbkalotten 12, 12', wie in der Figur 2 gezeigt, passgenau mit ihren Äquatoren zusammengeführt und geschlossen werden. In diesem Zustand kann die Beschichtungsflüssigkeit über das Rohr 22 und die Einlassöffnung 20 in den Hohlraum 26 des Behälters gemäß dem Verfahrensschritt iv) eingebracht werden und kann der mit dem Pulverpressling und dem Beschichtungsmaterial befüllte Behälter 10 in die Härterflüssigkeit Behälters gemäß dem Verfahrensschritt v) eingetaucht werden.

## Patentansprüche

1. Verfahren zur Beschichtung eines Pulverpresslings insbesondere zur Herstellung einer Getränkepulver enthaltenden Kapsel, welches die folgenden Schritte umfasst:
i) Bereitstellen eines Pulverpresslings aus einem wenigstens ein Polysaccharid enthaltendem Pulver,
ii) Bereitstellen eines Behälters (10) mit einer Behälterwand (24) aus einem perforierten Material, welche einen Hohlraum (26) umschließt, wobei das perforierte Material ein Material ist, das eine Vielzahl von kleinen, regelmässig in dem Material angeordnete Löcher aufweist, wobei die Löcher im Wesentlichen die gleiche Form und Grösse aufweisen, wobei der Behälter (10) eine Einlassöffnung (20) zum Einbringen von Beschichtungsflüssigkeit in den Hohlraum (26) aufweist,
iii) Einbringen des Pulverpresslings in den Hohlraum (26) des Behälters (10), wobei der Pulverpressling kleiner als das Volumen des Hohlraums (26) ist,
iv) Einbringen von einer ein Beschichtungsmaterial enthaltenden Beschichtungsflüssigkeit über die Einlassöffnung (20) in den Hohlraum (26),
v) Eintauchen des mit dem Pulverpressling und dem Beschichtungsmaterial befüllten Behälters (10) in eine eine Härterverbindung enthaltende Härterflüssigkeit, wobei die Viskosität der Härterflüssigkeit geringer als die Viskosität der Beschichtungsflüssigkeit ist, sowie
vi) Entnehmen des Behälters (10) aus der Härterflüssigkeit und Entnehmen des beschichteten Pulverpresslings aus dem Behälter (10).

2. Verfahren nach Anspruch 1, **dadurch gekennzeichnet, dass** der Pulverpressling kugelförmig ist und aus einem Pulver aus einer Substanz ausgewählt aus der Gruppe bestehend aus Kaffee, Tee, Trinkschokolade, Kakao und Milchpulver durch Pressen des Pulvers mit einem Druck von 0,01 bis 1.000 MPa, bevorzugt 0,05 bis 500 MPa, besonders bevorzugt 0,1 bis 100 MPa, weiter bevorzugt 0,5 bis 100 MPa, noch weiter bevorzugt 1 bis 100 MPa, ganz besonders bevorzugt 5 bis 50 MPa und höchst bevorzugt 15 bis 30 MPa erhalten worden ist.

3. Verfahren nach Anspruch 1 oder 2, **dadurch gekennzeichnet, dass** der Behälter (10) einen kugelförmigen Hohlraum (26) aufweist.

4. Verfahren nach einem der vorstehenden Ansprüche, **dadurch gekennzeichnet, dass** perforierte Material der Behälterwand (24) ein Drahtgewebe mit einer Maschenweite von 0,01 bis 0,30 mm, bevorzugt von 0,02 bis 0,21 mm, besonders bevorzugt von 0,04 bis 0,08 mm, ganz besonders bevorzugt von 0,05 bis 0,075 mm und höchst bevorzugt von 0,058 bis 0,068 mm ist.

5. Verfahren nach Anspruch 4, **dadurch gekennzeichnet, dass** das Drahtgewebe aus Edelstahl gefertigt ist und eine Drahtstärke von 0,01 bis 0,30 mm, bevorzugt von 0,02 bis 0,20 mm, besonders bevorzugt von 0,03 bis 0,10 mm, ganz besonders bevorzugt von 0,04 bis 0,06 mm und höchst bevorzugt von 0,045 bis 0,055 mm aufweist.

6. Verfahren nach einem der vorstehenden Ansprüche, **dadurch gekennzeichnet, dass** über der Einlassöffnung (20) des Behälters (10) ein mit dem Behälter (10) fest verbundenes Rohr (22) angeordnet ist.

7. Verfahren nach Anspruch 6, **dadurch gekennzeichnet, dass** das Rohr (22) ein Rechteckrohr (22) oder ein Rundrohr (22) mit einer Länge von 1,0 bis 5,0 cm und bevorzugt von 2,0 bis 4,0 cm ist.

8. Verfahren nach Anspruch 6 oder 7, **dadurch gekennzeichnet, dass** das Rohr (22) ein Rundrohr (22) mit einem Innendurchmesser von 0,1 bis 5,0 mm, bevorzugt von 0,5 bis 2,5 mm, besonders bevorzugt von 0,75 bis 1,25 mm, ganz besonders bevorzugt von 0,9 bis 1,1 mm und höchst bevorzugt von 0,95 bis 1,05 mm ist.

9. Verfahren nach einem der vorstehenden Ansprüche, **dadurch gekennzeichnet, dass** der Behälter (10) zwei über ein Scharnier (14) verbundene Halbkalotten (12, 12') jeweils gleicher Dimensionen jeweils gebildet aus dem perforierten Material umfasst, wobei die Halbkalotten (12, 12') einen kugelförmigen Hohlraum (26) umschließen, wenn die beiden Halbkalotten (12, 12') jeweils mit ihrem Äquator (16, 16') passgenau aufeinandergelegt sind, wobei eine der Halbkalotten (12, 12') an ihrem Pol die Einlassöffnung (20) aufweist.

10. Verfahren nach einem der vorstehenden Ansprüche, **dadurch gekennzeichnet, dass** die Einlassöffnung (20) einen kreisrunden Querschnitt mit einem Durchmesser von 0,1 bis 5,0 mm, bevorzugt von 0,5 bis 2,5 mm, besonders bevorzugt von 0,75 bis 1,25 mm, ganz besonders bevorzugt von 0,9 bis 1,1 mm und höchst bevorzugt von 0,95 bis 1,05 mm aufweist.

11. Verfahren nach einem der vorstehenden Ansprüche, **dadurch gekennzeichnet, dass** der Behälter (10) in einem Gestell mit ein oder mehreren anderen Behältern (10) gleicher Dimensionen verbunden ist, so dass mehrere Pulverpresslinge gleichzeitig beschichtet werden können.

12. Verfahren nach einem der vorstehenden Ansprüche, **dadurch gekennzeichnet, dass** eine Beschichtungsflüssigkeit eingesetzt wird, welche ein Beschichtungsmaterial enthält, das aus der Gruppe ausgewählt ist, welche aus Stärke, Cellulose, Chitin, Carrageen, Agar und Alginaten besteht.

13. Verfahren nach einem der vorstehenden Ansprüche, **dadurch gekennzeichnet, dass** eine Härterflüssigkeit eingesetzt wird, welche eine Härterverbindung enthält, welche das Beschichtungsmaterial über i) kovalente Bindungen oder ii) über ionische und/oder koordinative Bindungen vernetzt.

14. Verfahren nach einem der vorstehenden Ansprüche, **dadurch gekennzeichnet, dass** eine Beschichtungsflüssigkeit eingesetzt wird, welche als Beschichtungsmaterial ein Alkalimetallalginat enthält, sowie eine Härterflüssigkeit eingesetzt wird, welche als Härterverbindung ein Erdalkalimetallsalz enthält.

15. Verfahren nach Anspruch 14, **dadurch gekennzeichnet, dass** als Beschichtungsflüssigkeit eine Alkalimetallalginatlösung, bevorzugt eine wässrige 0,5 bis 5 gew.-%-ige Alkalimetallalginatlösung und besonders bevorzugt eine wässrige 0,5 bis 5 gew.-%-ige Natriumalginatlösung eingesetzt wird, sowie als Härterflüssigkeit eine Erdalkalimetallsalzlösung, bevorzugt eine wässrige 1 bis 7 gew.-%-ige Erdalkalimetallsalzlösung und besonders bevorzugt eine wässrige 1 bis 7 gew.-%-ige Calciumchloridlösung eingesetzt wird.

## Claims

1. Method for coating a powder compact, in particular for producing a capsule containing beverage powder, comprising the following steps:
i) Providing a powder compact of a powder containing at least one polysaccharide,
ii) Providing a container (10) having a container wall (24) of a perforated material enclosing a cavity (26), the material being a material having a plurality of small holes, the holes being regularly arranged in the material and each having at least substantially the same shape and size, the container (10) having an inlet opening (20) for introducing coating liquid into the cavity (26),
iii) placing the powder compact into the cavity (26) of the container (10), wherein the powder compact is smaller than the volume of the cavity (26),
iv) introducing a coating liquid containing a coating material into the cavity (26) via the inlet port (20),
v) immersing the container (10) filled with the powder compact and the coating material in a hardener liquid containing a hardener compound, the viscosity of the hardener liquid being lower than the viscosity of the coating liquid, and
vi) Removing the container (10) from the hardener liquid and removing the coated powder compact from the container (10).

2. The method according to claim 1, **characterized in that** the powder compact is spherical and made of a powder of a substance selected from the group consisting of coffee, tea, drinking chocolate, cocoa and milk powder by pressing the powder with a pressure of 0.01 to 1.000 MPa, preferably 0.05 to 500 MPa, more preferably 0.1 to 100 MPa, further preferably 0.5 to 100 MPa, still more preferably 1 to 100 MPa, even more preferably 5 to 50 MPa and most preferably 15 to 30 MPa.

3. Method according to claim 1 or 2, **characterized in that** the container (10) has a spherical cavity (26).

4. A method according to any one of the preceding claims, **characterized in that** perforated material of the container wall (24) is a wire mesh having a mesh size of from 0.01 to 0.30 mm, preferably from 0.02 to 0.21 mm, more preferably from 0.04 to 0.08 mm, even more preferably from 0.05 to 0.075 mm and most preferably from 0.058 to 0.068 mm.

5. The method according to claim 4, **characterized in that** the wire mesh is made of stainless steel and has a wire thickness of 0.01 to 0.30 mm, preferably of 0.02 to 0.20 mm, more preferably of 0.03 to 0.10 mm, most preferably of 0.04 to 0.06 mm and most preferably of 0.045 to 0.055 mm.

6. Method according to one of the preceding claims, **characterized in that** a tube (22) firmly connected to the container (10) is arranged above the inlet opening (20) of the container (10).

7. The method according to claim 6, **characterized in that** the tube (22) is a rectangular tube (22) or a round tube (22) having a length of from 1.0 to 5.0 cm and preferably from 2.0 to 4.0 cm.

8. The method according to claim 6 or 7, **characterized in that** the tube (22) is a round tube (22) having an inner diameter of 0.1 to 5.0 mm, preferably of 0.5 to 2.5 mm, more preferably of 0.75 to 1.25 mm, even more preferably of 0.9 to 1.1 mm and most preferably of 0.95 to 1.05 mm.

9. Method according to one of the preceding claims, **characterized in that** the container (10) comprises two half-calottes (12, 12'), each of the same dimensions and each formed from the perforated material, which are connected via a hinge (14), the half-calottes (12, 12') enclosing a spherical cavity (26) when the two half-calottes (12, 12') are each placed on top of one another with their equator (16, 16') in a snug fit, one of the half-calottes (12, 12') having the inlet opening (20) at its pole.

10. A method according to any one of the preceding claims, **characterized in that** the inlet opening (20) has a circular cross-section with a diameter of from 0.1 to 5.0 mm, preferably from 0.5 to 2.5 mm, more preferably from 0.75 to 1.25 mm, even more preferably from 0.9 to 1.1 mm, and most preferably from 0.95 to 1.05 mm.

11. Method according to one of the preceding claims, **characterized in that** the container (10) is connected in a rack with one or more other containers (10) of the same dimensions, so that several powder compacts can be coated simultaneously.

12. A method according to any one of the preceding claims, **characterized in that** a coating liquid is used which contains a coating material selected from the group consisting of starch, cellulose, chitin, carrageenan, agar and alginates.

13. The method according to any one of the preceding claims, **characterized in that** a hardener liquid is used which contains a hardener compound which crosslinks the coating material via i) covalent bonds or ii) via ionic and/or coordinative bonds.

14. The method according to one of the preceding claims, **characterized in that** a coating liquid is used which contains an alkali metal alginate as coating material, and a hardener liquid is used which contains an alkaline earth metal salt as hardener compound.

15. The method according to claim 14, **characterized in that** an alkali metal alginate solution, preferably an aqueous 0.5 to 5% by weight alkali metal alginate solution and particularly preferably an aqueous 0.5 to 5% by weight sodium alginate solution, is used as the coating liquid, and an alkaline earth metal salt solution, preferably an aqueous 1 to 7 % by weight alkaline earth metal salt solution and particularly preferably an aqueous 1 to 7 % by weight calcium chloride solution, is used as hardener liquid.

## Revendications

1. Procédé d'enrobage d'une poudre compacte, en particulier pour la production d'une capsule contenant une boisson en poudre, comprenant les étapes suivantes :
i) Fournir une poudre compacte contenant au moins un polysaccharide,
ii) Fournir un récipient (10) ayant une paroi de récipient (24) en matériau perforé enfermant une cavité (26), le matériau étant un matériau ayant une pluralité de petits trous, les trous étant régulièrement disposés dans le matériau et chacun ayant au moins sensiblement la même forme et la même taille, le récipient (10) ayant une ouverture d'entrée (20) pour introduire un liquide de revêtement dans la cavité (26) ,
iii) Placer la poudre compacte dans la cavité (26) du récipient (10), la poudre compacte étant plus petite que le volume de la cavité (26),
iv) Introduire un liquide de revêtement contenant un matériau de revêtement dans la cavité (26) par l'ouverture d'entrée (20),
v) Immerger le récipient (10) rempli de poudre compacte et de matériau de revêtement dans un liquide durcisseur contenant un composé durcisseur, la viscosité du liquide durcisseur étant inférieure à la viscosité du liquide de revêtement, et
vi) Retirer le récipient (10) du liquide durcisseur et retirer la poudre compacte enrobée du récipient (10).

2. Procédé selon la revendication 1, **caractérisé par le fait que** la poudre compacte est sphérique et constituée d'une poudre d'une substance choisie dans le groupe constitué par le café, le thé, le chocolat à boire, le cacao et le lait en poudre, en pressant la poudre avec une pression de 0,01 à 1 000 MPa, de préférence de 0,05 à 500 MPa, de préférence de 0,1 à 100 MPa, de préférence encore de 0,5 à 100 MPa, de préférence encore de 1 à 100 MPa, de préférence encore de 5 à 50 MPa et de préférence encore de 15 à 30 MPa.

3. Procédé selon la revendication 1 ou 2, **caractérisé par le fait que** le récipient (10) a une cavité sphérique (26).

4. Procédé selon l'une quelconque des revendications précédentes, **caractérisé par le fait que** le matériau perforé de la paroi du récipient (24) est un treillis métallique ayant une taille de maille de 0,01 à 0,30 mm, de préférence de 0,02 à 0,21 mm, plus préférentiellement de 0,04 à 0,08 mm, encore plus préférentiellement de 0,05 à 0,075 mm et plus préférentiellement de 0,058 à 0,068 mm.

5. Procédé selon la revendication 4, **caractérisé par le fait que** le treillis métallique est en acier inoxydable et a une épaisseur de 0,01 à 0,30 mm, de préférence de 0,02 à 0,20 mm, de préférence de 0,03 à 0,10 mm, de préférence de 0,04 à 0,06 mm et de préférence encore de 0,045 à 0,055 mm.

6. Procédé selon l'une des revendications précédentes, **caractérisé par le fait qu'**un tube (22) solidement relié au récipient (10) est disposé au-dessus de l'ouverture d'entrée (20) du récipient (10).

7. Procédé selon la revendication 6, **caractérisée par le fait que** le tube (22) est un tube rectangulaire (22) ou un tube rond (22) ayant une longueur de 1,0 à 5,0 cm et de préférence de 2,0 à 4,0 cm.

8. Procédé selon la revendication 6 ou 7, **caractérisée par le fait que** le tube (22) est un tube rond (22) ayant un diamètre intérieur de 0,1 à 5,0 mm, de préférence de 0,5 à 2,5 mm, plus préférentiellement de 0,75 à 1,25 mm, encore plus préférentiellement de 0,9 à 1,1 mm et plus préférentiellement de 0,95 à 1,05 mm.

9. Procédé selon l'une des revendications précédentes, **caractérisé en ce que** le récipient (10) comprend deux demi-calottes (12, 12'), chacune de mêmes dimensions et chacune formée du matériau perforé, qui sont reliées par une charnière (14), les demi-calottes (12, 12') renferment une cavité sphérique (26) lorsque les deux demi-calottes (12, 12') sont placées l'une sur l'autre avec leur équateur (16, 16') bien ajusté, l'une des demi-calottes (12, 12') ayant l'ouverture d'entrée (20) à son pôle.

10. Procédé selon l'une quelconque des revendications précédentes, **caractérisé en ce que** l'ouverture d'entrée (20) a une section transversale circulaire avec un diamètre de 0,1 à 5,0 mm, de préférence de 0,5 à 2,5 mm, plus préférentiellement de 0,75 à 1,25 mm, encore plus préférentiellement de 0,9 à 1,1 mm, et plus préférentiellement de 0,95 à 1,05 mm.

11. Procédé selon l'une des revendications précédentes, **caractérisé en ce que** le récipient (10) est relié dans un rack à un ou plusieurs autres récipients (10) de mêmes dimensions, de sorte que plusieurs poudres compactes peuvent être enduites simultanément.

12. Procédé selon l'une quelconque des revendications précédentes, **caractérisé par** l'utilisation d'un liquide d'enrobage contenant un matériau d'enrobage choisi dans le groupe constitué par l'amidon, la cellulose, la chitine, le carrag-hénane, l'agar et les alginates.

13. Procédé selon l'une quelconque des revendications précédentes, **caractérisé par** l'utilisation d'un liquide durcisseur contenant un composé durcisseur qui réticule le matériau de revêtement par i) des liaisons covalentes ou ii) des liaisons ioniques et/ou coordinatives.

14. Procédé selon l'une des revendications précédentes, **caractérisé par** l'utilisation d'un liquide d'enrobage contenant un alginate de métal alcalin comme matériau d'enrobage et d'un liquide durcisseur contenant un sel de métal alcalino-terreux comme composé durcisseur.

15. Procédé selon la revendication 14, **caractérisé en ce qu'**une solution d'alginate de métal alcalin, de préférence une solution aqueuse d'alginate de métal alcalin de 0,5 à 5 % en poids et de préférence une solution aqueuse d'alginate de sodium de 0,5 à 5 % en poids, est utilisée comme liquide d'enrobage, et une solution de sel de métal alcalino-terreux, de préférence une solution aqueuse de sel de métal alcalino-terreux de 1 à 7 % en poids et de préférence une solution aqueuse de chlorure de calcium de 1 à 7 % en poids, est utilisée comme liquide de durcissement.
